# EUROPÄISCHE PATENTANMELDUNG

(11) **EP 3 798 565 A1**
(43) Veröffentlichungstag der Anmeldung: **31.03.2021**
(21) Anmeldenummer: 20184686.2
(22) Anmeldetag: 08.07.2020
(51) Int. Cl.: F41G 3/14, F41G 3/16, F41H 13/00, G01S 7/495, G01S 7/4865, G01S 7/487, G01S 17/89, G01S 17/18

(54) **LASERWAFFENSYSTEM UND VERFAHREN ZUR BESTRAHLUNG EINES ZIELS**

(30) Priorität: 25.09.2019 DE 102019006717
(71) Anmelder: MBDA Deutschland GmbH, 86529 Schrobenhausen (DE)
(72) Erfinder: Dietrich, Stephan, 86916 Kaufering (DE); Mohring, Bernd, 89250 Senden (DE); Senft, Christoph, 85276 Pfaffenhofen (DE); Theobald, Christian, 86153 Augsburg (DE)
(74) Vertreter: Isarpatent

(57) **Zusammenfassung**

Ein Verfahren wird bereitgestellt zur Bestrahlung eines Ziels mit einem Laserwaffensystem. Das Laserwaffensystem umfasst einen gepulsten Beleuchtungslaser zur Beleuchtung des Ziels und einen mit dem Beleuchtungslaser synchronisierten Bildsensor, welcher für eine Belichtungsdauer innerhalb eines Belichtungsfensters mit einer Zeitverzögerung gegenüber einem abgestrahlten Laserpuls des Beleuchtungslasers aktivierbar ist, um den Laserpuls nach Reflektion an dem Ziel zu empfangen. Das Verfahren umfasst schrittweises zeitliches Verschieben des Belichtungsfensters; Aufnehmen eines Bildes mit dem Bildsensor für die jeweilig eingestellte zeitliche Position des Belichtungsfensters; Erfassen einer maximalen Helligkeitsänderung in den aufgenommenen Bildern in Abhängigkeit von der eingestellten zeitlichen Position des Belichtungsfensters; und Bestimmen einer Zielentfernung zu dem Laserwaffensystem aus der Zeitverzögerung, welche für die maximale Helligkeitsänderung eingestellt ist.

## Beschreibung

Die vorliegende Erfindung betrifft ein Laserwaffensystem und ein Verfahren zur Bestrahlung eines Ziels mit einem derartigen Laserwaffensystem.

Zur Bekämpfung von Zielen mit Hochenergie-Laserstrahlung sollte die Zielposition so exakt wie möglich im dreidimensionalen Raum bekannt sein. Allgemein ist es erstrebenswert, eine Entfernungsbestimmung, eine Zielverfolgung und eine Bekämpfung kleiner fliegender dynamischer Ziele vor wechselnden Hintergründen auch ganztägig zu ermöglichen. Aktuelle Systeme zur Zielverfolgung mit einem Laserwaffensystem beinhalten typischerweise einen Kamerasensor, welcher den Raumwinkel eines Objekts in drei Dimensionen bestimmt. Mit einem Laserentfernungsmesser (LEM) wird meist die Tiefe im Raum bestimmt. Hierzu ist jedoch eine genaue Harmonisierung der optischen Achse des Kamerasensors mit der des LEMs erforderlich. Außerdem ist die genaue Raumauflösung in lediglich einem Punkt gegeben (Kreuzung von LEM und Sichtlinie des Kamerasensors). In derartigen Ausführungen ist der LEM, welcher üblicherweise eine sehr geringe Divergenz besitzt, stets dem Ziel nachzuführen. Eine Aufweitung ist dabei wenig praktikabel, da hier nur schwer sichergestellt werden kann, dass die Entfernungsinformation wirklich von dem Ziel selbst und nicht von anderen Objekten der Szene oder von dem Hintergrund stammt. Die Rate der Laufzeitmessung erfolgt oft im zehntel Sekundenbereich. Passive Methoden wie Stereoskopie mit zwei TV-Kameras sind auf große Distanz ungenau, benötigen einen größeren Abstand zwischen zwei Sensoren und bieten keine Nachtsichtfähigkeit.

In jüngerer Zeit wird mitunter eine Technik zur Objekterfassung, Objekterkennung und/oder Objektverfolgung vorgeschlagen, die als "Gated-Viewing" oder "Range-Gated-Imaging" bezeichnet wird. Diesem Ansatz liegt der Grundgedanke zugrunde, Kameras mit extrem schnellen Verschlusszeiten (Gate) im Nanosekundenbereich zu verwenden, die mit einem Pulslaser als Beleuchter synchronisiert werden, wobei das ganze Ziel mit einem Laserpuls ausgeleuchtet wird. Durch Synchronisation der Kamera auf den Laserpuls mit einer entsprechenden Zeitverzögerung der Öffnung der Kamera ist es möglich, dass nur die reflektierte Strahlung aus einem bestimmten Entfernungsbereich vom Sensor der Kamera registriert wird. Die Zeitverzögerung entspricht dabei der Laufzeit des Laserpulses zu dem betrachteten Objekt und zurück. Das sogenannte "Gaten" der Kamera ermöglicht damit sowohl eine Separierung des Zieles vom Hintergrund, als auch ein Ausblenden des Vordergrundes (z. B. von natürlichen Nebeln und Tarnnebeln). Idealerweise sollten die verwendeten Kameras hierzu Verschlusszeiten im Nanosekundenbereich und eine hohe spektralen Empfindlichkeit aufweisen, die im Bereich der sogenannten "augensi cheren" Wellenlänge im nahen Infrarot (I > 1.4 µm) liegt (englisch: "Short-Wavelength Infrared", SWIR).

Derartige Ansätze werden beispielsweise in der Druckschrift Göhler et al., "Review on short-wavelength infrared laser gated-viewing at Fraunhofer IOSB," Optical engineering 56, 2016 beschrieben.

Vor diesem Hintergrund liegt der vorliegenden Erfindung die Aufgabe zugrunde, möglichst einfache und schnelle und dennoch präzise Lösungen für die Zielerfassung mit einem Laserwaffensystem zu finden.

Erfindungsgemäß wird diese Aufgabe gelöst durch ein Verfahren mit den Merkmalen des Patentanspruchs 1 und durch ein Laserwaffensystem mit den Merkmalen des Patentanspruchs 10.

Demgemäß ist ein Verfahren zur Bestrahlung eines Ziels mit einem Laserwaffensystem vorgesehen, wobei das Laserwaffensystem einen gepulsten Beleuchtungslaser zur Beleuchtung des Ziels und einen mit dem Beleuchtungslaser synchronisierten Bildsensor umfasst, welcher für eine Belichtungsdauer innerhalb eines Belichtungsfensters mit einer Zeitverzögerung gegenüber einem abgestrahlten Laserpuls des Beleuchtungslasers aktivierbar ist, um den Laserpuls nach Reflektion an dem Ziel zu empfangen. Das Verfahren umfasst schrittweises zeitliches Verschieben des Belichtungsfensters; Aufnehmen eines Bildes mit dem Bildsensor für die jeweilig eingestellte zeitliche Position des Belichtungsfensters; Erfassen einer maximalen Helligkeitsänderung in den aufgenommenen Bildern in Abhängigkeit von der eingestellten zeitlichen Position des Belichtungsfensters; und Bestimmen einer Zielentfernung zu dem Laserwaffensystem aus der Zeitverzögerung, welche für die maximale Helligkeitsänderung eingestellt ist.

Weiterhin ist ein Laserwaffensystem zur Bestrahlung eines Ziels vorgesehen. Das Laserwaffensystem umfasst einem gepulsten Beleuchtungslaser zur Beleuchtung des Ziels; einem mit dem Beleuchtungslaser synchronisierten Bildsensor, welcher für eine Belichtungsdauer innerhalb eines Belichtungsfensters mit einer Zeitverzögerung gegenüber einem abgestrahlten Laserpuls des Beleuchtungslasers aktivierbar ist, um den Laserpuls nach Reflektion an dem Ziel zu empfangen; und eine Steuereinheit zur Steuerung des Beleuchtungslasers und des Bildsensors, welche zur Ausführung eines erfindungsgemäßen Verfahrens ausgebildet ist.

Eine der vorliegenden Erfindung zugrunde liegende Idee besteht darin, eine ohnehin vorhandene Beleuchtung eines Laserwaffensystems zur Entfernungsbestimmung zu verwenden. Hierzu wird ein gatebarer Bildsensor, insbesondere ein Bildsensor zur Aufnahme zweidimensionaler Bilder, mit einem gepulsten Beleuchtungssystem hoher Frequenz gekoppelt. Durch entsprechende Synchronisierung bzw. Triggerung zwischen Lichtquelle und Sensor erhält man nach Laufzeitmessung ein Entfernungsband, welches auf dem Bildsensor abgebildet wird. Wird das Beleuchtungsfenster, d.h. das Gate, zwischen Lichtquelle und Sensor verschoben, so erhält man Bilder aus anderen Entfernungsbändern. Somit lässt sich eine Szene gezielt in drei Dimensionen erfassen. Als Entfernungskanal zur Speicherung des Bildes bietet sich zum Beispiel ein Alpha Bildkanal (Transparenz) an.

Vorteilhaft zur Umsetzung sind hierbei kurze Integrations- bzw. Belichtungszeiten des entsprechenden Bildsensors. Beispielsweise liegen minimale Belichtungszeiten von aktuellen SWIR-Kameras bei ca. 100 ns. Dies ermöglicht eine Genauigkeit von mindestens 30 m. Eine Idee der vorliegenden Erfindung ist es nun diese Belichtungszeit unter Ausnutzung der vorhandenen Faltung mit dem ausgehenden Laserpuls (typische Pulsbreiten können beispielsweise bei ca. 10 ns liegen, d.h. 3 m) durch "Gateshift" des Bildsensors unterabzutasten. Das Belichtungsfenster wird dabei solange verschoben bis ein Maximum über die Summe aller relevanten Pixel des Bildsensors erreicht wird. Liegt das Ziel innerhalb des Entfernungsbandes so bleibt das Maximum gleich. Schiebt man das Belichtungsfenster nun so lange bis das Ziel an der steigenden (oder fallenden Kante) des Belichtungsfensters liegt, so erkennt man einen starken Gradienten in der Helligkeit bzw. eine starke Änderung (Shift) in dem Bild bzw. dem zugehörigen Histogramm. Die Gateposition, d.h. die Position des Belichtungsfensters, kann nun derart gewählt werden, dass das Ziel sich auf der Kante im Bereich maximaler Helligkeit befindet. Aus der entsprechenden Position des Beleuchtungsfensters und der daraus folgenden Zeitverzögerung (welche sich mit der Verschiebung des Belichtungsfensters ebenso verändert) ergibt sich nun die Zielentfernung.

Im Ergebnis sind trotz der begrenzten Belichtungszeiten von SWIR-Kameras Genauigkeiten deutlich unter der Laserpulsbreite (z.B. 3 m) möglich (Verschlusszeiten typischer Kameras sind im Bereich von einzelnen Nanosekunden kontrollierbar), sofern vorhandener Jitter der Beleuchtung und der Sensorik vernachlässigbar ist. Die Problematik der nach unten begrenzten Belichtungszeiten von Sensoren kann somit mit dieser Methode der Kantendetektion umgangen werden.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das Verfahren ferner umfassen: schrittweises Reduzieren der Belichtungsdauer des Belichtungsfensters bei fest eingestellter Zeitverzögerung; Aufnehmen eines Bildes mit dem Bildsensor für die jeweilig eingestellte Belichtungsdauer des Belichtungsfensters; Erfassen eines Helligkeitsabfalls in den aufgenommenen Bildern in Abhängigkeit von der eingestellten Belichtungsdauer; und Bestimmen einer Zielentfernung zu dem Laserwaffensystem aus der Belichtungsdauer des vor dem Helligkeitsabfall aufgenommenen Bildes.

Neben einer hochauflösenden dreidimensionalen Bilderfassung bietet die Erfindung hiermit auch die Möglichkeit Objekte im 3D-Raum zu erkennen. Für die Erfassung von Objekten in freier Natur wird hierzu von einem großen Abstand des Objekts von vorhandenen Hintergründen ausgegangen. Wenn kein Vordergrund vorhanden ist (Ziel nicht verdeckt) kann zur Distanzermittlung mit einem sehr breiten Entfernungsband begonnen werden, d.h. einem großen Belichtungsfenster/Gate, z.B. 1 m bis 100 km, was einer Zeitverzögerung von etwa 3 ns (zur Vermeidung von Streulicht) und einer Belichtungsdauer von 333 µs entspricht. Dort ist das Ziel bei unbekannter Fokussierung des Objektivs (Entfernung unbekannt -> Objektivfokus auf Hyperfokaldistanz) nur begrenzt erkennbar. Ein Maß für das Vorhandensein des Ziels liefert die Helligkeit des Bildes (allg. Histogramm Auswertung). Nun wird die Entfernung und damit das Belichtungsfenster samt der Fokuseinstellung des Objektivs solange reduziert, bis das Ziel zuerst scharf und mit der folgenden Aufnahme nicht mehr in dem aufgenommenen Bild vorhanden ist, d.h. ein abrupter Helligkeitsabfall zwischen einzelnen Bildern auftritt (die Entfernung des Ziels liegt somit außerhalb des Entfernungsbandes, welches dem eingestellten Beleuchtungsfenster entspricht). Das zuletzt aufgenommene Bild, in dem das Objekt am schärfsten und hellsten sichtbar ist, gibt nun die Entfernung (3D-Position) zum Ziel an. Um Vordergrund (Nebel, Wirkung von Hochenergiebestrahlung) zu unterdrücken, kann anschließend optional noch die Zeitverzögerung angepasst werden. Die Anpassung des Belichtungsfensters kann hierbei mit der Entfernungseinstellung des Objektivs einhergehen.

Gemäß einer Weiterbildung kann der Bildsensor ein zweidimensionales Bild aufnehmen. Ein erfasster Helligkeitsabfall über randseitige Bereiche des zweidimensionalen Bildes kann als erfasster Hintergrund des Ziels gewertet werden und die Belichtungsdauer weiter zur Bestimmung der Zielentfernung reduziert werden.

Um das Ziel vor einem Hintergrund bestimmen zu können, kann somit zunächst der Abstand des Hintergrunds bestimmt werden. Hierbei wird davon ausgegangen, dass das Zielobjekt nicht bildfüllend ist und das gesamte Bild, d.h. einschließlich der Randpixel, erst durch vorhandenen Hintergrund vollständig beleuchtet wird. Das Beleuchtungsfenster, insbesondere dessen entfernte Kante, ist so zu wählen, dass der Hintergrund außerhalb liegt. Anschließend kann das zuvor geschilderte Verfahren zur Bestimmung der Zielentfernung weiter durchgeführt werden. Alternativ kann jedoch ebenso eine Auswertung des entsprechenden Histogramms erfolgen, indem Helligkeitssprünge des Histogramms betrachtet werden. Hier zeigt das Verschwinden des Hintergrunds ein anders Verhalten als das Verschwinden des Ziels.

Gemäß einer Weiterbildung kann das Belichtungsfenster vor der Reduzierung einem Zielentfernungsband entsprechen. Das Zielentfernungsband kann zwischen einer ersten Entfernungsgrenze zwischen 0,5 m und 10m und einer zweiten Entfernungsgrenze zwischen 1 km und 500 km liegen. Wie bereits oben beispielhaft erläutert, kann das Belichtungsfenster somit zunächst beispielsweise zwischen 1m und 100 km gewählt werden (ersten Entfernungsgrenze = 1 m, zweite Entfernungsgrenze = 100 km). Anschließend kann die zweite Entfernungsgrenze schrittweise verkleinert werden, bis das Ziel aus dem Entfernungsband herausfällt und ein entsprechender Helligkeitsabfall in den aufgenommenen Bildern auftritt. Das zuletzt aufgenommene Bild vor dem Helligkeitsabfall ist einer zweiten Entfernungsgrenze zugeordnet, die nun als Schätzung für die Zielentfernung verwendet werden kann.

Gemäß einer Weiterbildung kann das Verfahren ferner umfassen: Halbieren der Belichtungsdauer des Belichtungsfensters; Erfassen von Helligkeitsänderungen in dem nächsten aufgenommenen Bild, um zu bestimmen, ob sich das Ziel in oder außerhalb des halbierten Belichtungsfensters befindet; und Wählen des entsprechenden zeitlichen Bereichs in oder außerhalb des halbierten Belichtungsfensters, in welchem sich das Ziel befindet, als neues Belichtungsfenster.

Liegt das Ziel beispielsweise zwischen Hyperfokaldistanz und dem Unendlichen, dann ist keine Fokussierung notwendig und es kann das obige schnellere Vorgehen verfolgt werden. Hierbei wird das Belichtungsfenster halbiert (z.B. 3 ns Zeitverzögerung mit 166 µs Belichtung) und überprüft, in welchem der beiden Bereiche das Ziel liegt (z.B: 3 ns Zeitverzögerung mit 166 µs Belichtung oder 166 µs Zeitverzögerung mit 333 µs Belichtung). Anschließend wird das Belichtungsfenster in den zeitlichen Bereich gelegt, in welchem sich das Objekt befindet. Dieses neue Belichtungsfenster wird nun erneut halbiert und der obige Vorgang wiederholt. Derart lässt sich ein Ziel sehr schnell von einem Hintergrund isolieren. Beispielsweise kann die Position bei einer Entfernung von 1024 m in nur 8 Schritten auf 4 m genau bestimmt werden.

Gemäß einer Weiterbildung kann das Verfahren ferner umfassen: Verschieben des Belichtungsfensters jeweils nach Aufnahme einer vorgegebenen Anzahl von Bildern; Erfassen von Helligkeitsänderungen in zumindest einem Bild, welches mit dem verschobenen Belichtungsfenster aufgenommen wird, gegenüber den zuvor aufgenommenen Bildern; und Schätzen einer Bewegungsrichtung des Ziels auf Basis der erfassten Helligkeitsänderungen, wobei das Belichtungsfenster in Richtung der geschätzten Bewegungsrichtung verschoben wird.

Wenn ein Ziel gefunden wurde, so lässt sich dieses im dreidimensionalen Raum verfolgen. Hierzu kann das Belichtungsfenster bei jedem x-ten Bild, z.B. jedem 10 oder 100 Bild, minimal variiert werden. Aus dem Gradienten der Helligkeitsänderung lässt sich sehr schnell bestimmen, ob sich das Ziel auf das Laserwaffensystem zubewegt oder von diesem weg bewegt. Für diese Vorgehensweise sollte die Framerate schnell im Vergleich zur Änderung der Zielposition (Zielgeschwindigkeit) sein. Aus der hieraus geschätzten Bewegung des Ziels lässt sich ebenso eine entsprechende Geschwindigkeit abschätzen, welche zusammen mit der einer zweidimensionalen x,y-Komponente von dem Bildsensor einen 3D-Positionsvektor und geschätzten Geschwindigkeitsvektor liefern kann. Zur weiteren und genaueren Schätzung können geeignete Filter (z.B. ein Kalman-Filter) verwendet werden. Gemäß einer Weiterbildung kann das Laserwaffensystem weiterhin einen Wirklaser umfassen. Der Wirklaser kann einen Wirklaserstrahl auf das Ziel einstrahlen. Der Bildsensor kann ferner ein Filter vorgeschaltet sein. Der Filter kann Strahlung mit einer Wellenlänge des Wirklasers herausfiltern.

Das Verfahren der Erfindung kann unter anderem auch während der Einwirkung auf ein Ziel mit einem Hochenergielaser durchgeführt werden. Der Hochenergielaser kann hierzu in einem anderen Wellenlängenbereich arbeiten als der Beleuchtungslaser, z.B. im Dauerstrichbetrieb. Mit einem Filter wird die Wellenlänge des Hochenergielasers ausgeblendet. Weiterhin kann das Belichtungsfenster zusätzlich angepasst werden, sodass zusätzlich zur obigen spektralen Filterung eine weitere zeitliche Filterung vorhanden ist. Dadurch können sowohl Überstrahlungseffekte durch den Hochenergielaser selbst, als auch breitbandige thermische Emission der sehr heißen Ziels wirksam unterdrückt werden. Damit ist auch unter Bestrahlung eine genaue Zielverfolgung und damit eine präziser Haltepunkt auf dem Ziel möglich. Nicht zuletzt kann hierdurch die für die Bekämpfung notwendige Bestrahlungszeit deutlich reduziert werden.

Gemäß einer Weiterbildung kann der Beleuchtungslaser mit einer Wellenlänge im Infrarotbereich abstrahlen.

Wählt man die Wellenlänge des Beleuchters im nahen Infrarotbereich bei Wellenlängen über 1400 nm so sind deutlich höhere Pulsenergien möglich, ohne die Augensicherheit zu gefährden. Ferner lassen sich gezielt Nebel vor dem Ziel oder störender Hintergrund zu einem Ziel unterdrücken. Ein zusätzlicher Vorteil ist eine bessere Transmission bzw. höhere Sichtweite (aufgrund geringerer Streuung) der Atmosphäre in diesem Wellenlängenbereich. Der Vorteil gegenüber einem klassischen LEM ist eine einfache räumliche Isolierung des Zielsignals.

Alternativ kann auch der Wirklaser fokussiert oder defokussiert als Beleuchtungslaser zur 3D Bestimmung verwendet werden. Beispielsweise kann der Wirklaser im Dauerstrichbetrieb verwendet werden, wobei die emittierte Leistung möglichst kurzzeitig moduliert werden kann (z.B. Laserleistung drosseln oder den Laser kurz vollständig abschalten). Es werden somit keine einzelnen Laserpulse zur Entfernungsbestimmung und Zielverfolgung analysiert, sondern "Modulationspulse" in einem Laserstrahl im Dauerstrichbetrieb. Entsprechend kann nun die Modulation in den aufgenommenen Bildern gesucht werde und eine Entfernung durch Korrelation (Faltung) mit der emittierten Leistung bestimmt werden. Lässt sich der Laser nur langsam modulieren, so kann über das Erkennen der Helligkeits-Gradienten ein deutlich genaueres Subsampling erreicht werden (Erkennung der fallenden und steigenden Kante der emittierten Leistung, AMCW).

Gemäß einer Weiterbildung können von dem Bildsensor Bilder mit einer Rate von mindestens 100 Hz aufgenommen werden.

Gemäß einer Weiterbildung kann das Laserwaffensystem weiterhin eine Sicherheitseinrichtung umfassen. Die Sicherheitseinrichtung kann dazu ausgebildet sein, eine Bestrahlung mit dem Wirklaser zu sperren, solange das Ziel nicht von der Steuereinheit auf einem vorgegebenen Qualitätsniveau bestimmt ist.

Da der Einsatz eines Hochenergielasers erhebliche Sicherheitsvorkehrungen erfordert, ist auch eine funktionale Sicherheit eines derartigen Systems von elementarer Bedeutung. Die obige Sicherheitseinrichtung kann nun ausschließlich bei einer aktiven isolierten und eindeutig erkannten Zielsignatur Freigabe für den Wirklaser erteilten. Wird das Ziel (z.B. ein Flugobjekt im Luftraum) im dreidimensionalen Raum verloren, so wird entsprechend kein zurückreflektierter Laserpuls empfangen. Dieses sehr einfach und robuste "Nullsignal" kann eine Abschaltung des Wirklasers auslösen und derart das System in einen sicheren Zustand überführen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematisches Ablaufdiagramm eines Verfahrens zur Bestrahlung eines Ziels mit einem Laserwaffensystem gemäß einer Ausführungsform der Erfindung;
- Fig. 2: schematischer zeitlicher Ablauf bei dem Verfahren aus Fig. 1;
- Fig. 3: schematische Ansicht eines Laserwaffensystems gemäß einer Ausführungsform der Erfindung zur Ausführung des Verfahrens aus Fig. 1 und 2;
- Fig. 4: schematische Ansicht eines Laserwaffensystems gemäß einer weiteren Ausführungsform der Erfindung zur Ausführung des Verfahrens aus Fig. 1 und 2; und
- Fig. 5: schematische Ansicht eines Laserwaffensystems gemäß einer weiteren Ausführungsform der Erfindung zur Ausführung des Verfahrens aus Fig. 1 und 2.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

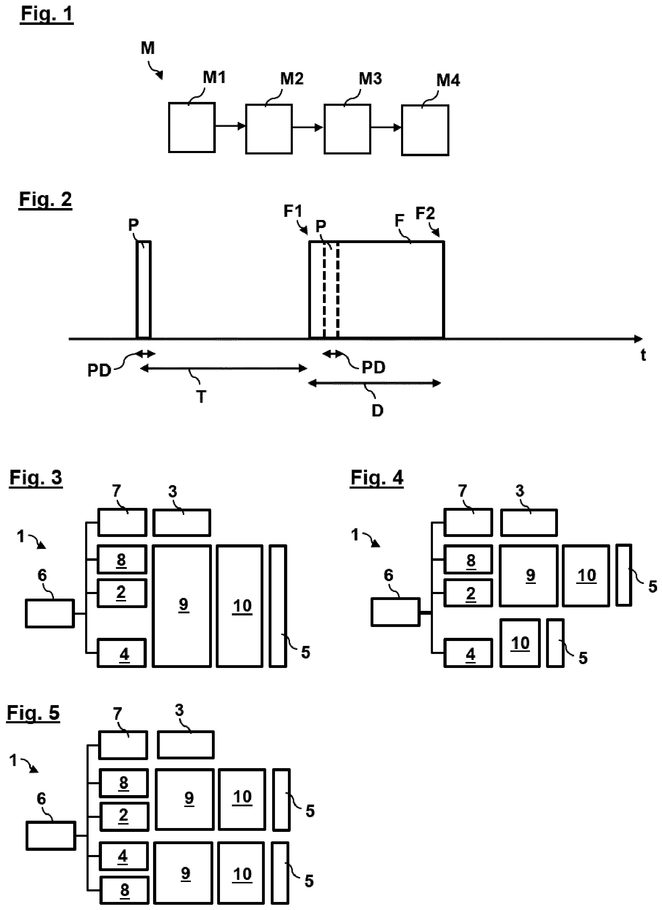

Figur 1 zeigt ein schematisches Ablaufdiagramm eines Verfahrens M zur Bestrahlung eines Ziels mit einem Laserwaffensystem 1 gemäß einer Ausführungsform der Erfindung.

Bei Systemen zur Schädigung oder Störung eines Objekts mittels gerichteter elektromagnetischer Strahlung ("Hochenergielaser-Systemen, "Abwehrstrahlung", "Directed Energy" etc.) wird ein (hochenergetischer) Laserstrahl ("Wirklaser') auf ein Zielobjekt gerichtet. Für eine gute Effizienz eines derartigen Systems ist dazu eine genaue Kenntnis der Entfernung zum Zielobjekt hilfreich bzw. notwendig, z.B. zur Fokussierung des Wirklasers auf das Zielobjekt und/oder zur Fokussierung des Bildes zur Beobachtung bzw. zur Verfolgen ("Tracking"). Üblicherweise werden zur Bestimmung der Entfernung separate Entfernungsmesser verwendet, die - je nach Funktionsprinzip - dann eigene Quellen zur Aussendung eines Lichtpulses verwenden. Um das Zielobjekt sichtbar zu machen, sehen derartige Laserwaffensysteme typischerweise zudem einen sogenannten Beleuchtungslaser vor, der zur Beleuchtung des Ziels ausgebildet ist. Die von dem Ziel reflektierte Strahlung kann auf einem Sensor und/oder Detektor nachgewiesen und zur Verfolgung des Ziels genutzt werden.

Das vorliegende Laserwaffensystem 1 umfasst entsprechend einen gepulsten Beleuchtungslaser 2 zur Beleuchtung des Ziels im nahen Infrarotbereich und einen Wirklaser 3, welcher dazu ausgebildet ist, einen Wirklaserstrahl auf das Ziel einzustrahlen, wobei der Wirklaserstrahl in einem anderen Wellenlängenbereich als der Beleuchtungslaser 2 arbeitet. Das Laserwaffensystem 1 umfasst ferner einen mit dem Beleuchtungslaser 2 synchronisierten Bildsensor 4, z.B. eine SWIR-Kamera. Der Bildsensor 4 ist für eine Belichtungsdauer D innerhalb eines Belichtungsfensters F mit einer Zeitverzögerung T gegenüber einem abgestrahlten Laserpuls P des Beleuchtungslasers 2 aktivierbar, um den Laserpuls P nach Reflektion an dem Ziel zu empfangen. Das System aus Beleuchtungslaser 2 und Bildsensor 4 nutzt hierbei den Ansatz des "Gated-Viewing", um ein Ziel zu erfassen und zu verfolgen. Weiterhin umfasst das Laserwaffensystem 1 eine Steuereinheit 6 zur Steuerung des Beleuchtungslasers 2 und des Bildsensors 4. Außerdem umfasst das Laserwaffensystem 1 einen Filter 5, welcher dem Bildsensor 4 vorgeschaltet ist und dazu ausgebildet ist, Strahlung mit einer Wellenlänge des Wirklasers 3 herauszufiltern. Darüber hinaus ist eine Sicherheitseinrichtung 7 mit der Steuereinheit kommunikativ verbunden und dazu ausgebildet, eine Bestrahlung mit dem Wirklaser 3 zu sperren, solange das Ziel nicht von der Steuereinheit 6 auf einem vorgegebenen Qualitätsniveau bestimmt ist.

Drei beispielhafte Laserwaffensysteme 1 dieser Art sind in Fig. 3 bis 5 dargestellt. Diese Ausführungen sollen lediglich demonstrieren, dass es unterschiedliche Ansätze für den Aufbau eines derartigen Laserwaffensystems 1 gibt. Das Laserwaffensystem 1 in Fig. 3 weist einen gemeinsamen Sende- und Empfangspfad beispielsweise mit Kopplung über Lochspiegel, Ring, Strahlteiler usw. auf. In diesem Fall gibt es aufgrund der gemeinsamen Sichtlinie keine Parallaxe zwischen den Systemkomponenten, sodass auch keine Harmonisierung notwendig ist. Zusätzlich umfasst das System in Fig. 3 optional einen Photodetektor 8, z.B. eine Photodiode, wie er in klassischen LEM genutzt wird.

Der alternative Aufbau gemäß Fig. 4 weist hingegen eine Trennung zwischen dem Beleuchtungslaser 2 und dem Bildsensor 4 auf. Eine hieraus resultierende Parallaxe zwischen einem Beleuchtungskegel und einem Empfangskegel kann prinzipiell als Hilfsmittel für einen Entfernungseinschätzung dienen.

In dem alternativen Aufbau in Fig. 5 wird ebenfalls ein getrennter Aufbau von Beleuchtungslaser 2 und Bildsensor 4 verfolgt. In diesem Fall wird ein Photodetektor 8 in Kombination mit dem Bildsensor 4 verwendet, um einen Entfernung zu einer Bildmitte zu messen. Aufgrund einer Harmonisierung des Photodetektors 8 mit dem Bildsensor 4 über einen Strahlteiler 9 ist eine einfache und schnelle Messung einer 3D-Position des verfolgten Ziels in der Bildmitte möglich.

Bezugnehmend auf Fig. 1 und 2 umfasst das Verfahren M zur Bestrahlung eines Ziels mit dem Laserwaffensystem 1 unter M1 schrittweises zeitliches Verschieben des Belichtungsfensters F, unter M2 Aufnehmen eines Bildes mit dem Bildsensor 4 für die jeweilig eingestellte zeitliche Position des Belichtungsfensters F, unter M3 Erfassen einer maximalen Helligkeitsänderung in den aufgenommenen Bildern in Abhängigkeit von der eingestellten zeitlichen Position des Belichtungsfensters F, und unter M4 Bestimmen einer Zielentfernung zu dem Laserwaffensystem 1 aus der Zeitverzögerung T, welche für die maximale Helligkeitsänderung eingestellt ist.

Das Verfahren M umgeht derart gewissermaßen die technisch derzeit begrenzten Belichtungszeiten von SWIR-Kameras oder dergleichen, indem das Belichtungsfenster F unterabgetastet wird (englisch: "Subsampling"). Dies kann anhand von Fig. 2 verdeutlicht werden. Links im Fig. 2 wird ein Laserpuls P von dem Beleuchtungslaser 2 auf das Ziel abgestrahlt. Der Laserpuls P wird von dem Ziel reflektiert und zu einem späteren Zeitpunkt rechts in Fig. 2 von dem Bildsensor 4 aufgezeichnet. Typische Laserpulse P haben dabei eine Pulsdauer PD von wenigen Nanosekunden (d.h. Pulsbreiten von wenigen Metern). Die Belichtungsdauer D eines typischen Bildsensors 4 liegt hingegen eher bei ca. 100 ns. Fällt der Laserpuls P somit in das Beleuchtungsfenster F des Bildsensors 4, so ergibt sich ein bestimmter Helligkeitswert unabhängig von der konkreten zeitlichen Positionen des Laserpulses P innerhalb des Beleuchtungsfensters F. In dem obigen Verfahren werden nun Bilder mit einer hohen Framerate bzw. Frequenz aufgezeichnet, z.B. mehrere hundert Hertz, wobei das Beleuchtungsfenster F solange verschoben wird, bis der empfangene Laserpuls P, und damit das Ziel, auf einer steigenden (oder fallenden) Kante des Belichtungsfensters F liegt. Bei Überschreiten dieser Stelle entsteht in dem aufgenommenen Bildern ein großer Helligkeitsgradient. Dieser wird erkannt und aus der zugehörigen zeitlichen Position kann mit großer Genauigkeit auf die Zielentfernung geschlossen werden. Da der Verschluss typischer Bildsensoren 4 sehr genau, im Bereich von Nanosekunden, zeitlich fixiert betätigt werden kann, kann somit über diese Form der Kantendetektion mit hoher Präzision auf die Entfernung des Ziels geschlossen werden. Da der Bildsensor 4 gleichzeitig ein zweidimensionales Bild des Ziels aufzeichnet, wird eine hochauflösende dreidimensionale Bilderfassung realisiert.

Die Bestimmung des Austrittzeitpunktes des Laserpulses P aus der Optik kann über die Messung eines Rückreflexes von einem Austrittsfenster (Schutzglas) mit Hilfe einer Fotodiode oder dergleichen erfolgen. Ein Teleskop ermöglicht ein äußerst genaues und robustes Tracking weit entfernter kleiner Ziele. Der Beleuchtungskegel ist einfach in dem Bildsensor 4 zu sehen und zu harmonisieren (ein erheblicher Vorteil gegenüber LEM).

Für einen Zielerfassung kann das Verfahren M weiterhin umfassen: schrittweises Reduzieren der Belichtungsdauer D des Belichtungsfensters F bei fest eingestellter Zeitverzögerung T, Aufnehmen eines Bildes mit dem Bildsensor 4 für die jeweilig eingestellte Belichtungsdauer D des Belichtungsfensters F, Erfassen eines Helligkeitsabfalls in den aufgenommenen Bildern in Abhängigkeit von der eingestellten Belichtungsdauer D, und Bestimmen einer Zielentfernung zu dem Laserwaffensystem 1 aus der Belichtungsdauer D des vor dem Helligkeitsabfall aufgenommenen Bildes.

Beispielsweise kann das Belichtungsfenster F in Fig. 2 einem Entfernungsband des Ziels mit einer unteren ersten Entfernungsgrenze F1 und einer oberen zweiten Entfernungsgrenze F2 entsprechen. Die erste Entfernungsgrenze F1 kann beispielsweise auf 1 m eingestellt sein, d.h. die zugehörige Zeitverzögerung T entspricht etwa 3 ns. Die zweite Entfernungsgrenze F2 kann beispielsweise sehr weit, z.B. auf 100 km, eingestellt sein. Geht man davon aus, dass der Hintergrund noch weiter entfernt ist und zudem kein Vordergrund vorhanden ist, so kann nun die zweite Entfernungsgrenze F2 schrittweise verkleinert werden, d.h. die der Belichtungsdauer D des Belichtungsfensters F schrittweise reduziert werden. Sobald das Ziel außerhalb des Belichtungsfensters F fällt, tritt ein Helligkeitsabfalls in den aufgenommenen Bildern auf. Die entsprechen zweite Entfernungsgrenze F2 kann nun als Schätzwert für die Zielentfernung berücksichtigt werden.

Um das Ziel auch vor einem Hintergrund bestimmten zu können, kann ein erfasster Helligkeitsabfall über randseitige Bereiche des zweidimensionalen Bildes des Bildsensors 4 als erfasster Hintergrund des Ziels gewertet werden. Hierbei wird davon ausgegangen, dass das eigentliche Ziel lediglich einen begrenzten Abschnitt des Bildes füllt. Die Belichtungsdauer D kann nun weiter zur Bestimmung der Zielentfernung reduziert werden, bis das eigentliche Ziel erkannt wird, indem ein Helligkeitsabfall über einen flächig begrenzten Bereich in den aufgenommenen Bildern nachgewiesen wird.

Zur schnellen Zielerkennung kann das Verfahren M weiterhin umfassen: Halbieren der Belichtungsdauer D des Belichtungsfensters F, Erfassen von Helligkeitsänderungen in dem nächsten aufgenommenen Bild, um zu bestimmen, ob sich das Ziel in oder außerhalb des halbierten Belichtungsfensters F befindet, und Wählen des entsprechenden zeitlichen Bereichs in oder außerhalb des halbierten Belichtungsfensters F, in welchem sich das Ziel befindet, als neues Belichtungsfenster F. Dieses neue Belichtungsfenster F wird im Folgenden wieder halbiert und die obigen Verfahrensschritte werden iteriert, bis das Ziel ausreichend genau eingegrenzt ist.

Weiterhin kann das Laserwaffensystem 1 zur Zielverfolgung eingesetzt werden, wobei gegenüber LEM ein mit mehreren hundert Hertz raumaufgelöstes Tracking möglich ist. Zu diesem Zweck umfasst das Verfahren M weiterhin: Verschieben des Belichtungsfensters F jeweils nach Aufnahme einer vorgegebenen Anzahl von Bildern, Erfassen von Helligkeitsänderungen in zumindest einem Bild, welches mit dem verschobenen Belichtungsfenster F aufgenommen wird, gegenüber den zuvor aufgenommenen Bildern, und Schätzen einer Bewegungsrichtung des Ziels auf Basis der erfassten Helligkeitsänderungen, wobei das Belichtungsfenster F in Richtung der geschätzten Bewegungsrichtung verschoben wird. Zu diesem Zweck kann ein geeigneter Filter, z.B. ein Kalman-Filter zur Anwendung kommen.

Im Ergebnis ermöglichen die beschriebenen Laserwaffensysteme 1 somit ganztägig sowohl eine Entfernungsbestimmung, ein Tracking als auch eine Bekämpfung kleiner dynamischer Ziele vor wechselnden Hintergründen mit und ohne Hochenergiebeschuss auf Basis einer aktiven (und augensicheren) Beleuchtung. Ziele können vor Hintergründen deutlich einfacherer separiert werden als mit herkömmlichen LEM. Eine aufwendige Harmonisierung sowie Parallaxen werden vermieden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Laserwaffensystem
- 2: Beleuchtungslaser
- 3: Wirklaser
- 4: Bildsensor
- 5: Filter
- 6: Steuereinheit
- 7: Sicherheitseinrichtung
- 8: Photodetektor
- 9: Strahlkombinierung
- 10: Austrittsoptik
- D: Belichtungsdauer
- F: Belichtungsfenster
- F1: erste Entfernungsgrenze
- F2: zweite Entfernungsgrenze
- T: Zeitverzögerung
- P: Laserpuls
- PD: Pulsdauer
- M: Verfahren
- M1-M4: Verfahrensschritte

## Patentansprüche

1. Verfahren (M) zur Bestrahlung eines Ziels mit einem Laserwaffensystem (1),
wobei das Laserwaffensystem (1) umfasst:
einen gepulsten Beleuchtungslaser (2) zur Beleuchtung des Ziels; und
einen mit dem Beleuchtungslaser (2) synchronisierten Bildsensor (4), welcher für eine Belichtungsdauer (D) innerhalb eines Belichtungsfensters (F) mit einer Zeitverzögerung (T) gegenüber einem abgestrahlten Laserpuls (P) des Beleuchtungslasers (2) aktivierbar ist, um den Laserpuls (P) nach Reflektion an dem Ziel zu empfangen;
wobei das Verfahren (M) umfasst:
schrittweises zeitliches Verschieben (M1) des Belichtungsfensters (F);
Aufnehmen (M2) eines Bildes mit dem Bildsensor (4) für die jeweilig eingestellte zeitliche Position des Belichtungsfensters (F);
Erfassen (M3) einer maximalen Helligkeitsänderung in den aufgenommenen Bildern in Abhängigkeit von der eingestellten zeitlichen Position des Belichtungsfensters (F); und
Bestimmen (M4) einer Zielentfernung zu dem Laserwaffensystem (1) aus der Zeitverzögerung (T), welche für die maximale Helligkeitsänderung eingestellt ist.

2. Verfahren (M) nach Anspruch 1, weiterhin mit:
schrittweises Reduzieren der Belichtungsdauer (D) des Belichtungsfensters (F) bei fest eingestellter Zeitverzögerung (T);
Aufnehmen eines Bildes mit dem Bildsensor (4) für die jeweilig eingestellte Belichtungsdauer (D) des Belichtungsfensters (F);
Erfassen eines Helligkeitsabfalls in den aufgenommenen Bildern in Abhängigkeit von der eingestellten Belichtungsdauer (D); und
Bestimmen einer Zielentfernung zu dem Laserwaffensystem (1) aus der Belichtungsdauer (D) des vor dem Helligkeitsabfall aufgenommenen Bildes.

3. Verfahren (M) nach Anspruch 2, wobei der Bildsensor (4) ein zweidimensionales Bild aufnimmt, wobei ein erfasster Helligkeitsabfall über randseitige Bereiche des zweidimensionalen Bildes als erfasster Hintergrund des Ziels gewertet wird und die Belichtungsdauer (D) weiter zur Bestimmung der Zielentfernung reduziert wird.

4. Verfahren (M) nach Anspruch 2 oder 3, wobei das Belichtungsfenster (F) vor der Reduzierung einem Zielentfernungsband entspricht, welches zwischen einer ersten Entfernungsgrenze (F1) zwischen 0,5 m und 10m und einer zweiten Entfernungsgrenze (F2) zwischen 1 km und 500 km liegt.

5. Verfahren (M) nach einem der Ansprüche 1 bis 4, weiterhin mit:
Halbieren der Belichtungsdauer (D) des Belichtungsfensters (F);
Erfassen von Helligkeitsänderungen in dem nächsten aufgenommenen Bild, um zu bestimmen, ob sich das Ziel in oder außerhalb des halbierten Belichtungsfensters (F) befindet; und
Wählen des entsprechenden zeitlichen Bereichs in oder außerhalb des halbierten Belichtungsfensters (F), in welchem sich das Ziel befindet, als neues Belichtungsfenster (F).

6. Verfahren (M) nach einem der Ansprüche 1 bis 5 weiterhin mit:
Verschieben des Belichtungsfensters (F) jeweils nach Aufnahme einer vorgegebenen Anzahl von Bildern;
Erfassen von Helligkeitsänderungen in zumindest einem Bild, welches mit dem verschobenen Belichtungsfenster (F) aufgenommen wird, gegenüber den zuvor aufgenommenen Bildern; und
Schätzen einer Bewegungsrichtung des Ziels auf Basis der erfassten Helligkeitsänderungen, wobei das Belichtungsfenster (F) in Richtung der geschätzten Bewegungsrichtung verschoben wird.

7. Verfahren (M) nach einem der Ansprüche 1 bis 6, wobei das Laserwaffensystem (1) weiterhin einen Wirklaser (3) umfasst, der einen Wirklaserstrahl auf das Ziel einstrahlt, wobei dem Bildsensor (4) ferner ein Filter (5) vorgeschaltet ist, welcher Strahlung mit einer Wellenlänge des Wirklasers (3) herausfiltert.

8. Verfahren (M) nach einem der Ansprüche 1 bis 7, wobei der Beleuchtungslaser (2) mit einer Wellenlänge im Infrarotbereich abstrahlt.

9. Verfahren (M) nach einem der Ansprüche 1 bis 8, wobei von dem Bildsensor (4) Bilder mit einer Rate von mindestens 100 Hz aufgenommen werden.

10. Laserwaffensystem (1) zur Bestrahlung eines Ziels, mit:
einem gepulsten Beleuchtungslaser (2) zur Beleuchtung des Ziels;
einem mit dem Beleuchtungslaser (2) synchronisierten Bildsensor (4), welcher für eine Belichtungsdauer (D) innerhalb eines Belichtungsfensters (F) mit einer Zeitverzögerung (T) gegenüber einem abgestrahlten Laserpuls (P) des Beleuchtungslasers (2) aktivierbar ist, um den Laserpuls (P) nach Reflektion an dem Ziel zu empfangen; und
einer Steuereinheit (6) zur Steuerung des Beleuchtungslasers (2) und des Bildsensors (4), welche zur Ausführung eines Verfahrens (M) nach einem der Ansprüche 1 bis 6 ausgebildet ist.

11. Laserwaffensystem (1) nach Anspruch 10, weiterhin mit:
einem Wirklaser (3), welcher dazu ausgebildet ist, einen Wirklaserstrahl auf das Ziel einzustrahlen; und
einem Filter (5), welcher dem Bildsensor (4) vorgeschaltet ist und dazu ausgebildet ist, Strahlung mit einer Wellenlänge des Wirklasers (3) herauszufiltern.

12. Laserwaffensystem (1) nach Anspruch 11, weiterhin mit:
einer Sicherheitseinrichtung (7), welche dazu ausgebildet ist, eine Bestrahlung mit dem Wirklaser (3) zu sperren, solange das Ziel nicht von der Steuereinheit (6) auf einem vorgegebenen Qualitätsniveau bestimmt ist.

13. Laserwaffensystem (1) nach einem der Ansprüche 10 bis 12, wobei der Beleuchtungslaser (2) mit einer Wellenlänge im Infrarotbereich ausgebildet ist.

14. Laserwaffensystem (1) nach einem der Ansprüche 10 bis 13, wobei der Bildsensor (4) dazu ausgebildet ist, Bilder mit einer Rate von mindestens 100 Hz aufzunehmen.
